(19) Europäisches Patentamt

European Patent Office

Office européen des brevets

(11) **EP 4 436 121 A1**

(12) **EUROPEAN PATENT APPLICATION**
published in accordance with Art. 153(4) EPC

(43) Date of publication:
**25.09.2024   Bulletin 2024/39**

(21) Application number: **22906665.9**

(22) Date of filing: **15.12.2022**

(51) International Patent Classification (IPC):
*H04L 27/26* (2006.01)

(52) Cooperative Patent Classification (CPC):
**H04L 27/02; H04L 27/26**

(86) International application number:
**PCT/CN2022/139383**

(87) International publication number:
**WO 2023/109920 (22.06.2023 Gazette 2023/25)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **16.12.2021   CN 202111541846**

(71) Applicant: **Huawei Technologies Co., Ltd.
Shenzhen, Guangdong 518129 (CN)**

(72) Inventors:
• **QU, Weilin
  Shenzhen, Guangdong 518129 (CN)**
• **JIN, Zhe
  Shenzhen, Guangdong 518129 (CN)**
• **WU, Yiling
  Shenzhen, Guangdong 518129 (CN)**
• **LUO, Zhihu
  Shenzhen, Guangdong 518129 (CN)**

(74) Representative: **Goddar, Heinz J. et al
Boehmert & Boehmert
Anwaltspartnerschaft mbB
Pettenkoferstrasse 22
80336 München (DE)**

(54)   **COMMUNICATION METHOD AND APPARATUS**

(57)   A communication method and apparatus are provided. The method includes: A network device determines an OFDM signal, where the OFDM signal carries a first amplitude shift keying symbol, and the first amplitude shift keying symbol is an amplitude shift keying symbol ON; and generates a first signal based on the OFDM signal and N bits, where the first signal carries N second amplitude shift keying symbols in time domain, and N is a positive integer greater than or equal to 2. The network device sends the first signal. According to the foregoing method, information transmission efficiency of an amplitude shift keying modulation scheme can be improved.

FIG. 4

## Description

### CROSS-REFERENCE TO RELATED APPLICATIONS

This application claims priority to Chinese Patent Application No. 202111541846.2, filed with the China National Intellectual Property Administration on December 16, 2021 and entitled "COMMUNICATION METHOD AND APPARATUS", which is incorporated herein by reference in its entirety.

### TECHNICAL FIELD

Embodiments of this application relate to the wireless communication field, and in particular, to a communication method and apparatus.

### BACKGROUND

As new radio (new radio, NR) communication, machine-type communication (machine-type communication, MTC), and internet of things (internet of things, IoT) communication are increasingly widely used, a quantity of connections of an IoT device is gradually increasing. The industry has an increasingly strong requirement for reducing costs and power consumption of the IoT device.

For a conventional NR network, a long term evolution (long term evolution, LTE) network, or an institute of electrical and electronics engineers (institute of electrical and electronics engineers, IEEE) 802.11 a/g/n/ac/ax network, when a multi-carrier orthogonal frequency division multiplexing (orthogonal frequency division multiplexing, OFDM) transmission system is used, a conventional cellular OFDM signal receiver consumes power of hundreds of milliwatts (mW) on average. It can be seen that average power consumption of the OFDM signal receiver is high.

To reduce power consumption of the IoT device, a new signal that can reduce power consumption of the receiver may be designed to reduce power consumption of the receiver. Currently, in a wireless fidelity (wireless fidelity, Wi-Fi) system, it has been proposed that an amplitude shift keying modulation signal can be received with low power consumption by using an envelope detection receiver. However, when a design method in which the signal is used is directly applied to an NR or LTE system, information transmission efficiency of an amplitude shift keying modulation scheme is excessively low.

### SUMMARY

This application provides a communication method and apparatus, to improve information transmission efficiency of an amplitude shift keying modulation scheme.

According to a first aspect, this application provides a communication method. The method may be performed by a network device or an apparatus having a function of the network device, for example, a chip. The method includes: determining an OFDM signal, where the OFDM signal carries a first amplitude shift keying symbol, and the first amplitude shift keying symbol is an amplitude shift keying symbol ON; generating a first signal based on the OFDM signal and N bits, where the first signal carries N second amplitude shift keying symbols in time domain, and N is a positive integer greater than or equal to 2; and sending the first signal.

The OFDM signal is a signal corresponding to one OFDM symbol, the one OFDM symbol is an OFDM symbol before a cyclic prefix is added, and a frequency domain subcarrier spacing corresponding to the OFDM signal may be any one of 15 kHz, 30 kHz, or 60 kHz.

According to the foregoing method, the first signal may include a plurality of second amplitude shift keying symbols, so that in an NR or LTE OFDM system, a plurality of amplitude shift keying symbols can be transmitted, in duration of one OFDM symbol, to a terminal device having an envelope detection receiver or a terminal device for non-coherent demodulation. Therefore, information transmission efficiency of such a terminal device can be effectively improved, that is, an information transmission rate of an amplitude shift keying modulation scheme can be effectively improved.

In a possible design, the OFDM signal includes N first-interval signals in time domain.

In a possible design, the N first-interval signals are the same, or the N first-interval signals have same energy.

According to the foregoing method, the N first-interval signals included in the OFDM signal in time domain are time domain signals with relatively smooth waveforms. In this way, when a secondary receiver of the terminal device performs non-coherent demodulation based on a received signal by using an envelope detector, if the first signal includes a plurality of amplitude shift keying symbols ON, the plurality of amplitude shift keying symbols ON included in the first signal can be accurately determined. Therefore, a probability of false determining is reduced.

In a possible design, the N first-interval signals do not overlap with each other in time domain, and the N second amplitude shift keying symbols do not overlap with each other in time domain.

According to the foregoing method, no inter-symbol interference exists between the N second amplitude shift keying symbols in time domain, so that a probability of false determining for an amplitude shift keying symbol can be reduced.

In a possible design, when the first signal is generated based on the OFDM signal and the N bits, an $i^{th}$ first-interval signal in the N first-interval signals in the OFDM signal is multiplied by a window function corresponding to an $i^{th}$ bit in the N bits, to obtain an $i^{th}$ second amplitude shift keying symbol in the N second amplitude shift keying symbols.

According to the foregoing method, each of the N second amplitude shift keying symbols in the first signal can carry one bit. Therefore, in an interval for one OFDM signal, N bits that can be used for detection of an envelope detection receiver can be carried, so that information transmission efficiency of an amplitude shift keying modulation scheme can be improved.

In a possible design, when the i$^{th}$ bit is 1, the window function corresponding to the i$^{th}$ bit is any one of a rectangular window function, a Hanning window function, a Hamming window function, or a Blackman window function; and/or when the i$^{th}$ bit is 0, the window function corresponding to the i$^{th}$ bit is a function with an all-zero function value. For example, the rectangular window function is a function with an all-one function value.

In the foregoing design, different window functions are used for different bit values, so that when a secondary receiver of the terminal device performs non-coherent demodulation based on a received signal by using an envelope detector, a plurality of amplitude shift keying symbols ON included in the first signal can be accurately determined. In addition, the use of the Hanning window function, or the Hamming window function, or the Blackman window function can effectively alleviate out-of-band spectrum leakage after spectrum window addition.

In a possible design, duration of the second amplitude shift keying symbol is a second interval, and the second interval is equal to a first interval, or the second interval is less than the first interval.

In a possible design, duration of the first amplitude shift keying symbol is equal to duration of the OFDM signal; duration of the first signal is equal to the duration of the OFDM signal; the first interval is equal to 1/N times the duration of the OFDM signal; and the second interval is less than or equal to 1/N times the duration of the OFDM signal.

In a possible design, the duration of the OFDM signal is a time length of one OFDM symbol corresponding to a subcarrier spacing of at least one of 15 kHz, 30 kHz, or 60 kHz.

The duration of the OFDM signal is a time length of the OFDM symbol before the cyclic prefix is added.

In a possible design, when the first interval is greater than the second interval, a guard interval exists between two adjacent second amplitude shift keying symbols.

In the foregoing design, the guard interval exists between adjacent second amplitude shift keying symbols in the first signal, so that when a receive end demodulates the second amplitude shift keying symbol, inter-symbol interference generated between the plurality of second amplitude shift keying symbols due to a multi-path channel and multi-path delay falls within the guard interval. The receive end removes the guard interval, to avoid impact of the inter-symbol interference on demodulation performance of the second amplitude shift keying symbol, thereby ensuring the demodulation performance of the second amplitude shift keying symbol.

In a possible design, duration corresponding to the guard interval is equal to duration of the cyclic prefix corresponding to the OFDM signal.

In a possible design, during determining of the OFDM signal, a first sequence is mapped to a plurality of non-contiguous frequency domain subcarriers, where any two adjacent frequency domain subcarriers in the plurality of non-contiguous frequency domain subcarriers are separated by N-1 frequency domain subcarriers; and time domain mapping is performed on the plurality of mapped non-contiguous frequency domain subcarriers, to obtain the OFDM signal.

According to the foregoing method, the OFDM signal including the N first-interval signals may be obtained.

In a possible design, during determining of the OFDM signal, a first sequence is mapped to a plurality of contiguous frequency domain subcarriers; and time domain mapping is performed on the plurality of mapped contiguous frequency domain subcarriers, to obtain the OFDM signal.

According to the foregoing method, it can be effectively learned that the N first-interval signals in the OFDM signal are the same, or the N first-interval signals have same energy.

In a possible design, an element included in the first sequence is a modulation constellation point in a first modulation scheme, and the first modulation scheme is any one of BPSK, QPSK, 16QAM, 64QAM, or 256QAM; or the first sequence is a ZC sequence.

According to the foregoing design, an amplitude envelope and an energy fluctuation degree of a time domain OFDM signal to which a ZC sequence with a root factor of 1 is mapped are lower than an amplitude envelope and an energy fluctuation degree of a time domain OFDM signal to which a ZC sequence with another root factor is mapped. In this way, performance of subsequent amplitude shift keying symbol demodulation can be improved, and coverage performance of wake-up signal transmission can be effectively improved.

In a possible design, the method further includes: sending first information to the terminal device, where the first information indicates a relationship between the duration of the second amplitude shift keying symbol and the duration of the first signal. For example, the first information indicates that a quantity of second amplitude shift keying symbols included in the first signal is N.

According to the foregoing method, the network device may notify the terminal device of the quantity of second amplitude shift keying symbols included in the first signal, or the relationship between the duration of the second amplitude shift keying symbol and the duration of the first signal, so that the terminal device determines the duration of the second amplitude shift keying symbol, and correctly demodulates the second amplitude shift keying symbol based on the duration of the second amplitude shift keying symbol.

According to a second aspect, a communication method is provided. The method may be performed by a terminal device or an apparatus having a function of the terminal device, for example, a chip. The method includes: receiving a first signal, where the first signal includes N second amplitude shift keying symbols in time domain; determining the N second amplitude shift keying symbols based on the first signal; and determining N bits based on the N second amplitude shift keying symbols.

According to the foregoing method, the first signal may include a plurality of second amplitude shift keying symbols, so that in an NR or LTE OFDM system, a terminal device having an envelope detection receiver or a terminal device for non-coherent demodulation can receive a plurality of amplitude shift keying symbols in duration of one OFDM symbol, and then receive a plurality of bits. Therefore, information transmission efficiency of such a terminal device can be effectively improved, that is, an information transmission rate of an amplitude shift keying modulation scheme can be effectively improved.

In a possible design, the method further includes: receiving first information, where the first information indicates a relationship between duration of the second amplitude shift keying symbol and duration of the first signal. The method further includes: determining the duration of the second amplitude shift keying symbol based on the relationship between the duration of the second amplitude shift keying symbol and the duration of the first signal; and
when determining the N second amplitude shift keying symbols based on the first signal, determining the N second amplitude shift keying symbols based on the first signal and the duration of the second amplitude shift keying symbol.

According to the foregoing design, the terminal device determines the duration of the second amplitude shift keying symbol, so that the terminal device can correctly demodulate the second amplitude shift keying symbol based on the duration of the second amplitude shift keying symbol.

According to a third aspect, this application provides a communication apparatus, where the apparatus includes a processing unit and a transceiver unit.

The processing unit is configured to: determine an OFDM signal, where the OFDM signal carries a first amplitude shift keying symbol, and the first amplitude shift keying symbol is an amplitude shift keying symbol ON; and generate a first signal based on the OFDM signal and N bits, where the first signal carries N second amplitude shift keying symbols in time domain, and N is a positive integer greater than or equal to 2. The transceiver unit is configured to send the first signal.

In a possible design, the OFDM signal includes N first-interval signals in time domain.

In a possible design, the N first-interval signals are the same, or the N first-interval signals have same energy.

In a possible design, the N first-interval signals do not overlap with each other in time domain, and the N second amplitude shift keying symbols do not overlap with each other in time domain.

In a possible design, the processing unit is configured to: when generating the first signal based on the OFDM signal and the N bits, multiply an $i^{th}$ first-interval signal in the N first-interval signals in the OFDM signal by a window function corresponding to an $i^{th}$ bit in the N bits, to obtain an $i^{th}$ second amplitude shift keying symbol in the N second amplitude shift keying symbols.

In a possible design, when the $i^{th}$ bit is 1, the window function corresponding to the $i^{th}$ bit is any one of a rectangular window function, a Hanning window function, a Hamming window function, or a Blackman window function; and/or the rectangular window function is a function with an all-one function value; and when the $i^{th}$ bit is 0, the window function corresponding to the $i^{th}$ bit is a function with an all-zero function value.

In a possible design, duration of the second amplitude shift keying symbol is a second interval, and the second interval is equal to a first interval, or the second interval is less than the first interval.

In a possible design, duration of the first amplitude shift keying symbol is equal to duration of the OFDM signal; duration of the first signal is equal to the duration of the OFDM signal; the first interval is equal to 1/N times the duration of the OFDM signal; and the second interval is less than or equal to 1/N times the duration of the OFDM signal.

In a possible design, the duration of the OFDM signal is a time length of one OFDM symbol corresponding to a subcarrier spacing of at least one of 15 kHz, 30 kHz, or 60 kHz.

In a possible design, when the second interval is less than the first interval, a guard interval exists between two adjacent second amplitude shift keying symbols.

In a possible design, duration corresponding to the guard interval is equal to duration of a cyclic prefix corresponding to the OFDM signal.

In a possible design, the processing unit is configured to: when determining the OFDM signal, map a first sequence to a plurality of non-contiguous frequency domain subcarriers, where any two adjacent frequency domain subcarriers in the plurality of non-contiguous frequency domain subcarriers are separated by N-1 frequency domain subcarriers; and perform time domain mapping on the plurality of mapped non-contiguous frequency domain subcarriers, to obtain the OFDM signal.

In a possible design, the processing unit is configured to: when determining the OFDM signal, map a first sequence to a plurality of contiguous frequency domain subcarriers; and perform time domain mapping on the plurality of mapped contiguous frequency domain subcarriers, to obtain the OFDM signal.

In a possible design, an element included in the first sequence is a modulation constellation point in a first modulation scheme, and the first modulation scheme is any one of BPSK, QPSK, 16QAM, 64QAM, or 256QAM; or the first sequence is a ZC sequence.

In a possible design, the transceiver unit is configured to send first information to the terminal device, where the first information indicates a relationship between the duration of the second amplitude shift keying symbol and the duration of the first signal.

According to a fourth aspect, this application provides a communication apparatus, where the apparatus includes a transceiver unit and a processing unit.

The transceiver unit is configured to receive a first signal, where the first signal includes N second amplitude shift keying symbols in time domain. The processing unit is configured to: determine the N second amplitude shift keying symbols based on the first signal; and determine N bits based on the N second amplitude shift keying symbols.

In a possible design, the transceiver unit is configured to receive first information, where the first information indicates a relationship between duration of the second amplitude shift keying symbol and duration of the first signal. The processing unit is further configured to determine the duration of the second amplitude shift keying symbol based on the relationship between the duration of the second amplitude shift keying symbol and the duration of the first signal; and the processing unit is configured to: when determining the N second amplitude shift keying symbols based on the first signal, determine the N second amplitude shift keying symbols based on the first signal and the duration of the second amplitude shift keying symbol.

For technical effects of the third aspect and the fourth aspect, refer to corresponding technical effects of the first aspect and the second aspect.

According to a fifth aspect, this application further provides an apparatus. The apparatus may perform the foregoing method design. The apparatus may be a chip or a circuit that can perform the functions corresponding to the foregoing method, or a device including the chip or the circuit.

In a possible implementation, the apparatus includes: a memory, configured to store computer-executable program code; and a processor, where the processor is coupled to the memory. The program code stored in the memory includes instructions. When the processor executes the instructions, the apparatus or a device on which the apparatus is installed is enabled to perform the method in any one of the foregoing possible designs.

The apparatus may further include a communication interface. The communication interface may be a transceiver. Alternatively, if the apparatus is a chip or a circuit, the communication interface may be an input/output interface of the chip, for example, an input/output pin.

In a possible design, the apparatus includes corresponding functional units, separately configured to implement the steps in the foregoing method. The functions may be implemented by hardware, or may be implemented by executing corresponding software by hardware. The hardware or the software includes one or more units that correspond to the foregoing functions.

According to a sixth aspect, this application provides a computer-readable storage medium. The computer-readable storage medium stores a computer program, and when the computer program is run on an apparatus, the method according to any one of the possible designs is performed.

According to a seventh aspect, this application provides a computer program product. The computer program product includes a computer program, and when the computer program is run on an apparatus, the method according to any one of the possible designs is performed.

## BRIEF DESCRIPTION OF DRAWINGS

FIG. 1 is a schematic of an architecture of a mobile communication system used in this application;
FIG. 2 is a schematic of a signal processing method in 802.11ba according to this application;
FIG. 3 is a schematic of a waveform according to this application;
FIG. 4 is an overview flowchart of a communication method according to this application;
FIG. 5A is a schematic 1 of N first-interval signals that are included in an OFDM signal according to this application;
FIG. 5B is a schematic 2 of N first-interval signals that are included in an OFDM signal according to this application;
FIG. 5C is a schematic 3 of N first-interval signals that are included in an OFDM signal according to this application;
FIG. 5D is a schematic 4 of N first-interval signals that are included in an OFDM signal according to this application;
FIG. 6A is a schematic of a simplified waveform of a time domain signal of an OFDM signal according to this application;
FIG. 6B is a schematic of a real waveform of a time domain signal of an OFDM signal according to this application;
FIG. 7A is a schematic of a first signal existing when a first interval is equal to a second interval according to this application;
FIG. 7B is a schematic of a first signal existing when a first interval is greater than a second interval according to this application;
FIG. 8A is a schematic of a spectrum of an OFDM signal according to this application;
FIG. 8B is a schematic of a spectrum of a first signal determined when a window function corresponding to a bit of a value "1" is a rectangular window function according to this application;

FIG. 8C is a schematic 1 of a spectrum of a first signal determined when a window function corresponding to a bit of a value "1" is a Hamming window function according to this application;

FIG. 8D is a schematic 2 of a spectrum of a first signal determined when a window function corresponding to a bit of a value "1" is a Hamming window function according to this application;

FIG. 9 is a possible example block diagram 1 of a communication apparatus according to this application; and

FIG. 10 is a possible example block diagram 2 of a communication apparatus according to this application.

**DESCRIPTION OF EMBODIMENTS**

The following clearly and completely describes the technical solutions in embodiments of this application with reference to the accompanying drawings in embodiments of this application. It is clear that the described embodiments are merely some but not all of embodiments of this application. In the specification, claims, and accompanying drawings of this application, the terms "first", "second", corresponding term numbers, and the like are intended to distinguish between similar objects but do not necessarily indicate a specific order or sequence. It should be understood that the terms used in such a way are interchangeable in proper circumstances, which is merely a discrimination manner that is used when objects having a same attribute are described in embodiments of this application. In addition, the terms "include", "comprise" and any other variants mean to cover the non-exclusive inclusion, so that a process, method, system, product, or device that includes a series of units is not necessarily limited to including those units, but may include other units not expressly listed or inherent to such a process, method, product, or device.

In descriptions of this application, "/" means "or" unless otherwise specified. For example, A/B may indicate A or B. In this application, "and/or" describes only an association relationship for describing associated objects and indicates that three relationships may exist. For example, A and/or B may indicate the following three cases: Only A exists, both A and B exist, and only B exists. In addition, in the descriptions of this application, "at least one item" means one or more items, and "a plurality of items" means two or more items. "At least one item (piece) of the following" or a similar expression thereof means any combination of these items, including a singular item (piece) or any combination of plural items (pieces). For example, at least one item (piece) of a, b, or c may indicate a, b, c, a and b, a and c, b and c, or a, b, and c, where a, b, and c may be in a singular form or a plural form.

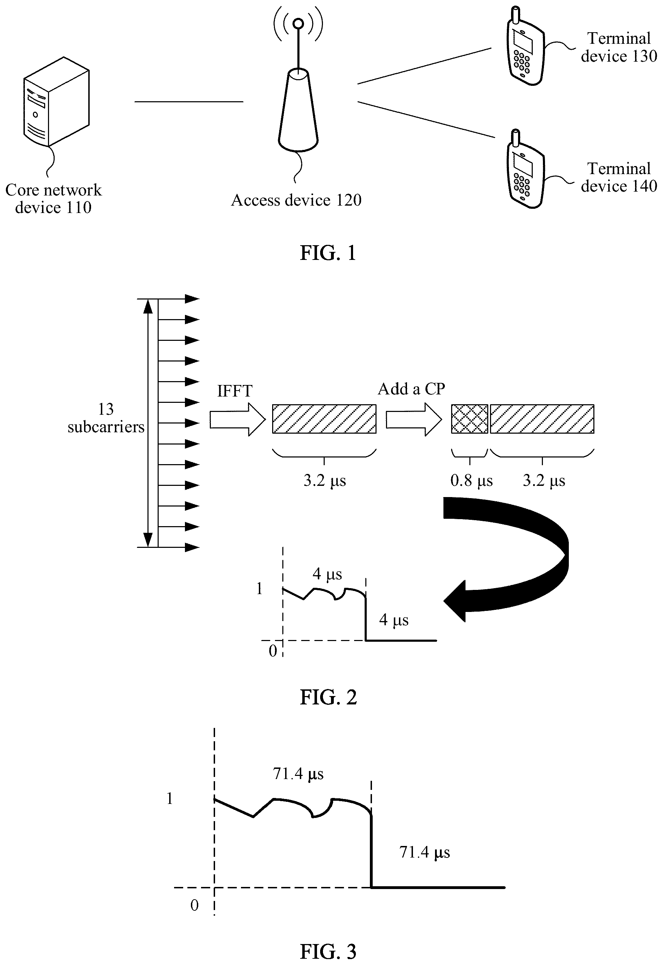

FIG. 1 is a schematic of an architecture of a mobile communication system used in an embodiment of this application. As shown in FIG. 1, the mobile communication system includes a core network device 110, an access device 120, and at least one terminal device (like a terminal device 130 and a terminal device 140 shown in FIG. 1). The terminal device is connected to the access device, and the access device is connected to the core network device. The core network device and the access device may be different physical devices that are independent of each other, or functions of the core network device and logical functions of the access device may be integrated into a same physical device, or some functions of the core network device and some functions of the access device may be integrated into one physical device. The terminal device may be located at a fixed position, or may be mobile. FIG. 1 is only a schematic. The communication system may further include other network devices, for example, may further include a wireless repeater device and a wireless backhaul device. This is not shown in FIG. 1. In embodiments of this application, quantities of core network devices, access devices, and terminal devices included in the mobile communication system are not limited.

The terminal device is connected to the access device in a wireless manner or a wired manner, to access the mobile communication system. The access device may be a base station (base station), an evolved NodeB (evolved NodeB, eNodeB), a transmission reception point (transmission reception point, TRP), a next generation NodeB (next generation NodeB, gNB) in a 5G mobile communication system, a base station in a future mobile communication system, an access node in a Wi-Fi system, or the like; or the access device may be a module or a unit that implements a part of functions of a base station, for example, may be a central unit (central unit, CU), or a distributed unit (distributed unit, DU). A specific technology and a specific device form that are used by the access device are not limited in embodiments of this application. In this application, the access device is referred to as a network device for short. Unless otherwise specified, the network device is an access device.

The terminal device may also be referred to as a terminal, user equipment (user equipment, UE), a mobile station, a mobile terminal, or the like. The terminal device may be a mobile phone, a tablet computer, a computer having a wireless transceiver function, a virtual reality terminal device, an augmented reality terminal device, a wireless terminal in industrial control, a wireless terminal in self driving, a wireless terminal in remote surgery, a wireless terminal in a smart grid, a wireless terminal in transportation safety, a wireless terminal in a smart city, a wireless terminal in smart home, or the like. A specific technology and a specific device form that are used by the terminal device are not limited in embodiments of this application.

For example, the terminal device in embodiments of this application may have two receivers, including a primary receiver and a secondary receiver. The primary receiver is similar to a conventional cellular OFDM signal receiver, and the secondary receiver is a receiver whose power consumption is less than 1 mW. For example, the secondary receiver may be configured to receive a wake-up signal (wake-up signal, WUS). Therefore, the secondary receiver is also referred to as a WUR receiver. In the communication system shown in FIG. 1, the terminal device 130 and/or the terminal device 140 have/has the foregoing two receivers.

It should be noted that a specific implementation of the secondary receiver is not limited in this application. For example, the secondary receiver may be a module configured to receive the WUS, or any functional entity that can receive the WUS. The functional entity may be integrated with the terminal device.

It should be understood that FIG. 1 is only a simplified schematic of an example for ease of understanding. The communication system 100 may further include another network device or another terminal device. This is not shown in FIG. 1.

The network device and the terminal device each may be deployed on the land, and include an indoor device, an outdoor device, a handheld device, or a vehicle-mounted device, may be deployed on a water surface, or may be deployed on an airplane, a balloon, and a satellite in the air. An application scenario of the network device and the terminal device is not limited in embodiments of this application.

The network device and the terminal device may communicate with each other by using a licensed spectrum, or may communicate with each other by using a licensed-free spectrum, or may communicate with each other by using both the licensed spectrum and the licensed-free spectrum. The network device and the terminal device may communicate with each other by using a spectrum below 6 gigahertz (gigahertz, GHz), may communicate with each other by using a spectrum above 6 GHz, or may communicate with each other by using both a spectrum below 6 GHz and a spectrum above 6 GHz. A spectrum resource used between the network device and the terminal device is not limited in embodiments of this application.

The technical solutions provided in embodiments of this application can be used in various communication systems. For example, the technical solutions may be applied to an LTE system or a 5G system, or may be applied to another future-oriented new system. This is not specifically limited in embodiments of this application. In addition, the terms "system" and "network" may be substituted for each other.

For ease of understanding embodiments of this application, several basic concepts in embodiments of this application are briefly described.

1. Wake-up Radio (wake-up radio, WUR)

In a communication network, a large part of energy of a device is wasted in listening when no signal is received. A related solution in an existing conventional 802.11 protocol focuses on optimizing a sleep policy of the device. In addition to optimizing the sleep policy, another way to reduce energy waste of the device is to use a low-power WUR. In addition to a conventional primary transceiver, the device further includes a WUR transceiver. After the primary transceiver enters deep sleep, the low-power WUR transceiver wakes up and starts to work. If another device needs to communicate with the device, the another device first sends a wake-up signal (wake-up signal, WUS) (or referred to as a wake-up frame (wake-up packet, WUP)) to the WUR transceiver of the device. After correctly receiving the WUS sent to the WUR transceiver, the WUR transceiver wakes up the primary transceiver to perform communication.

In the WUR technology, the low-power WUR transceiver is used to replace the primary transceiver to listen to a channel when a medium is idle, thereby effectively reducing an energy waste of the device.

2. Amplitude shift keying (amplitude shift keying, ASK)

A modulation scheme that uses a baseband digital signal to control an amplitude change of a carrier is called amplitude shift keying, also called digital amplitude modulation. A simplest form is binary amplitude shift keying (2ASK).

For example, 2ASK modulation may be implemented by using a multiplier and a switch circuit. The carrier is on or off under the control of a digital signal 1 or 0. When a digital signal is 1, a carrier of an amplitude A is on, and in this case, the carrier of the amplitude A is sent on a transmission channel. When a digital signal is 0, a carrier of an amplitude B is on, and in this case, the carrier of the amplitude B is sent on the transmission channel. Therefore, a receive end may determine whether a digital signal is 1 or 0 based on an amplitude of a detected carrier.

3. On-off keying (On-Off Keying, OOK) modulation

OOK modulation is on-off amplitude shift keying modulation. OOK is a special example of 2ASK modulation.

For example, OOK modulation may be implemented by using a multiplier and a switch circuit. A carrier is on or off under the control of a digital signal 1 or 0. When a digital signal is 1, the carrier is on, and in this case, a carrier is sent on a transmission channel. When a digital signal is 0, no carrier is on, and in this case, no carrier is sent on the transmission channel. Therefore, a receive end may determine whether a digital signal is 1 or 0 based on detection of whether a carrier exists.

If the OOK modulation is applied to an NR or LTE system, an OOK modulation symbol with a high amplitude (or a high envelope, a high level, or high energy) (for example, higher than a threshold, or not equal to 0) is referred to as an OOK modulation symbol {1}, an OOK modulation symbol ON (ON), or an OOK modulation symbol on; and an OOK modulation symbol with a low amplitude (or a low envelope, a low level, or low energy) (for example, lower than a threshold, or equal to 0) is referred to as an OOK modulation symbol {0}, an OOK modulation symbol OFF (OFF), or an OOK modulation symbol off. Magnitude of an amplitude is defined relative to an amplitude demodulation threshold of a receiver. If the amplitude is greater than the demodulation threshold, the amplitude is high. If the amplitude is less than the demodulation threshold, the amplitude is low.

4. Coherent demodulation and non-coherent demodulation

A coherent carrier needs to be restored in the coherent demodulation, and an original digital baseband signal is obtained based on a function of the coherent carrier and a modulated signal, where the coherent carrier and a carrier of a digital baseband signal modulated at a transmit end have a same frequency and a same phase.

No coherent carrier needs to be restored in the non-coherent demodulation, and an original digital baseband signal is recovered based on an amplitude envelope of a modulated signal.

Therefore, compared with the coherent demodulation, the non-coherent demodulation is simpler, but has performance loss.

5. Envelope detection

Envelope detection is a signal detection method in which a high-frequency signal is used as an input signal to obtain an envelope or an amplitude line of a low-frequency original signal through a half-wave or full-wave rectifier circuit. Based on the obtained envelope of the original signal, a receiver performs digital sampling on the envelope of the original signal, compares the envelope with an amplitude or energy threshold set by the receiver, and determines whether the transmitted signal is 1 or 0, that is, whether the signal is on or off (ON/OFF).

6. Frequency band FR1

According to 3GPP specifications, 5G networks mainly use two frequency bands: a frequency band FR1 and a frequency band FR2. A frequency range of the frequency band FR1 is 450 MHz to 6 GHz, and the frequency band FR1 is also called sub-6 GHz (sub 6GHz) frequency band. A frequency range of the frequency band FR2 is 24.25 GHz to 52.6 GHz, and the frequency band FR2 is usually called millimeter wave (mmWave).

In the IEEE 802.11ba WUR protocol, currently, operating on a 2.4 GHz or 5 GHz frequency is supported. 802.11ba supports a subcarrier spacing of 312.5 kHz, and an OFDM time domain signal time is a symbol of 4 μs (which may be referred to as a high data rate (high data rate, HDR)) and a symbol of 2 μs (which may be

referred to as a low data rate (low data rate, LDR)).

FIG. 2 is a schematic of a signal processing method in 802.11ba. The WUR signal occupies 13 center subcarriers of 20 MHz of a system, and occupies a bandwidth of approximately 4.06 MHz. A sequence is mapped to 12 subcarriers other than a center subcarrier (subcarrier #0) in the 13 subcarriers. An element of the sequence may be selected from a modulation constellation point in phase shift keying (for example, binary phase shift keying (binary phase shift keying, BPSK) or quadrature phase shift keying (quadrature phase shift keying, QPSK)) and/or quadrature amplitude (for example, 16QAM, 64QAM, or 256QAM).

For example, after the element of the sequence is determined, inverse fast Fourier transform (inverse fast Fourier transform, IFFT) and cyclic prefix (cyclic prefix, CP) addition operations of an OFDM transmitter are performed, to generate an OFDM time domain signal. In this case, a generated symbol of 4 μs is used as an ON symbol, that is, a WUR receiver determines, through envelope detection, that the symbol is a sent OOK modulation symbol {1}. If no information is sent on the 13 subcarriers, an OFDM time domain signal generated after IFFT and CP addition operations of the OFDM transmitter is a signal without energy. In this case, the symbol is used as an OFF symbol, that is, the WUR receiver determines, through envelope detection, that the symbol is an OOK modulation symbol {0}.

802.11ba supports Manchester (Manchester) line encoding. For a symbol of 4 μs, an information bit 0 is encoded as 1010, and an information bit 1 is encoded as 0101. Therefore, to transmit one piece of information, four ON/OFF symbols are required, and an information transmission rate is 1 bit/(4*4 μs)=62.5 kbps.

If a method for generating a waveform according to the IEEE 802.11ba standard is directly introduced into NR, an ON/OFF symbol time of a waveform changes from 4 μs to 66.7 μs by using an example in which a subcarrier spacing is 15 kHz. As shown in FIG. 3, FIG. 3 is a schematic of a waveform. When a subcarrier of a subcarrier spacing like 15 kHz, 30 kHz, or 60 kHz is used in an NR system, a time of an OFDM time domain signal is far greater than a time of an OFDM time domain signal of an IEEE WUR. If one ON/OFF OFDM time domain signal still carries 1-bit 1/0 information, an information transmission rate is far less than an information transmission rate of the WUR. For example, when the subcarrier spacing is 15 kHz, an information transmission rate is far less than that of the IEEE WUR. As a result, information transmission efficiency of an amplitude shift keying modulation scheme of the WUR in NR is excessively low, and wake-up efficiency of a terminal device is greatly reduced.

The OFDM time domain signal time may also be referred to as duration of an OFDM signal, or a symbol time of the OFDM signal, or the like. The OFDM signal is a signal corresponding to one OFDM symbol, the one OFDM symbol is an OFDM symbol before a cyclic prefix is added, and a frequency domain subcarrier spacing corresponding to the OFDM signal may be any one of 15 kHz, 30 kHz, or 60 kHz. The duration of the OFDM signal is a time length of the OFDM symbol before the cyclic prefix is added.

It may be understood that, the foregoing merely uses the NR system as an example to describe a case in which an information transmission rate of the amplitude shift keying modulation scheme is low when an OFDM signal can transmit only one amplitude shift keying symbol because a subcarrier spacing is small and an OFDM time domain signal time is long. In addition, another OFDM system may also have a low information transmission rate due to a small subcarrier spacing and a long OFDM time domain signal time. Therefore, the method provided in embodiments of this application is not only applicable to the NR system, but may also be used in the another OFDM system. This is not limited in this application.

To resolve the problem that the information transmission rate of the amplitude shift keying modulation scheme is low due to the small subcarrier spacing and the long OFDM time domain signal time, this application provides a communication method, so that one OFDM time domain signal can carry a plurality of ON/OFF information waveforms, thereby improving information transmission efficiency of the amplitude shift keying modulation scheme.

The amplitude shift keying symbol in this application may be an amplitude shift keying modulation symbol, an ASK modulation symbol mentioned in the foregoing basic concepts, a binary ASK modulation symbol, or an OOK modulation symbol. Alternatively, the amplitude shift keying symbol may be another signal, as an ON modulation symbol, capable of presenting a high amplitude or energy at an interval in time domain, or another signal, as an OFF modulation symbol, capable of presenting a low amplitude or energy at an interval in time domain. For example, that an amplitude of a signal within an interval in time domain is high may mean that an average amplitude of the signal within the interval in time domain is higher than a corresponding specified threshold. That energy of a signal within an interval in time domain is high may mean that the energy or average energy of the signal within the interval in time domain is higher than a corresponding specified threshold. That an amplitude of a signal within an interval in time domain is low may mean that an average amplitude of the signal within the interval in time domain is lower than a corresponding specified threshold, or that energy of a signal within an interval in time domain is low may mean that the energy or average energy of the signal within the interval in time domain is lower than a corresponding specified threshold.

The amplitude shift keying symbol includes an amplitude shift keying symbol ON and an amplitude shift keying symbol OFF. The amplitude shift keying symbol ON may also be referred to as an amplitude shift keying symbol {1}, an ON symbol, a high-energy symbol, or a high-energy symbol {1}. For example, the amplitude shift keying symbol ON is an amplitude shift keying symbol whose signal energy within duration of the amplitude shift keying symbol is greater than a specified threshold. The amplitude shift keying symbol OFF may also be referred to as an amplitude shift keying symbol {0}, an OFF symbol, a low-energy symbol, or a low-energy symbol {0}. For example, the amplitude shift keying symbol OFF is an amplitude shift keying symbol whose signal energy within duration of the amplitude shift keying symbol is less than a specified threshold. It may be understood that the foregoing parameter for determining an amplitude shift keying symbol ON or an amplitude shift keying symbol OFF is high energy or low energy of a signal within duration of the amplitude shift keying symbol, or may be replaced with high average amplitude or low average amplitude of a signal within duration of the amplitude shift keying symbol, or high average energy or low average energy of a signal within duration of the amplitude shift keying symbol. The foregoing high or low is compared with a specified threshold. If a value is greater than the threshold, the value is high. If a value is less than the threshold, the value is low. This is not limited in this application. The following uses only the energy of the signal within the duration of the amplitude shift keying symbol as an example for description.

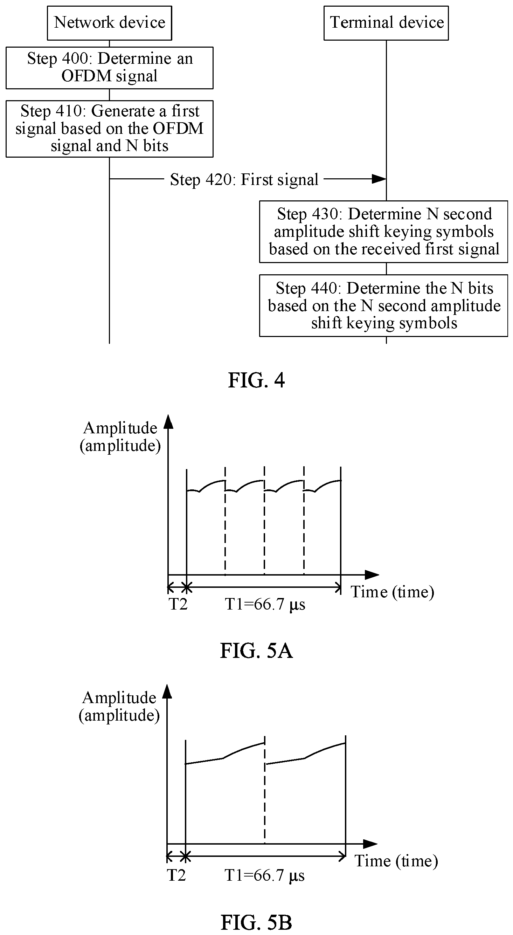

To improve information transmission efficiency of an amplitude shift keying modulation scheme, an embodiment of this application provides a communication method, as shown in FIG. 4. It may be understood that a specific structure of an execution body of the method provided in embodiments of this application is not particularly limited in the following embodiments, provided that a program that records code of the method provided in the embodiments of this application can be run to perform communication according to the method provided in the embodiments of this application. For example, the execution body may be a terminal device or a functional module that can invoke and execute a program in the terminal device, or may be a network device or a functional module that can invoke and execute a program in the network device. The following uses only the terminal device or the network device as an example for description.

Step 400: The network device determines an OFDM signal.

The OFDM signal is a signal corresponding to one OFDM symbol, or a signal including one OFDM symbol. The one OFDM symbol is an OFDM symbol before a cyclic prefix is added. A frequency domain subcarrier spacing corresponding to the OFDM signal may be any one of 15 kHz, 30 kHz, or 60 kHz.

For example, the OFDM signal carries a first amplitude shift keying symbol. The first amplitude shift keying symbol is an amplitude shift keying symbol ON. Duration of the first amplitude shift keying symbol is equal to duration of the OFDM signal.

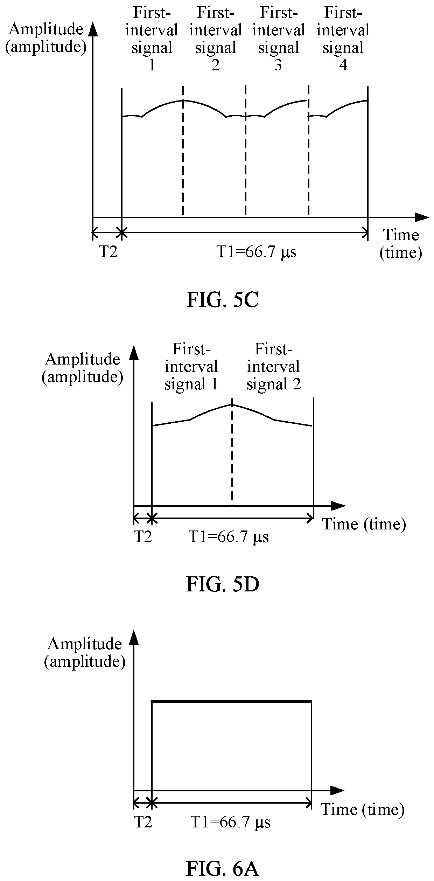

In a possible implementation, the OFDM signal includes N first-interval signals in time domain. N is a positive integer greater than or equal to 2. The N first-interval signals are the same, as shown in FIG. 5A or FIG. 5B, or the N first-interval signals have same energy, as shown in FIG. 5C or FIG. 5D. For example, that the N first-interval signals have same energy may mean that envelopes of the N first-interval signals are the same, or envelopes respectively corresponding to at least two of the N first-interval signals are in axial symmetry, where an axis of symmetry between the envelopes of the two first-interval signals that are in axial symmetry is a time boundary of an end position of a first interval between the two first-interval signals. For example, the N first-interval signals include at least a first-interval signal 1 and a first-interval signal 2, where an envelope of the first-interval signal 1 and an envelope of the first-interval signal 2 are in axial symmetry, and if N is greater than 2, a first-interval signal other than the first-interval signal 1 and the first-interval signal 2 in the N first-interval signals is the same as the first-interval signal 1, or the same as the first-interval signal 2.

In addition, the N first-interval signals do not overlap with each other in time domain. The first interval is equal to 1/N times the duration of the OFDM signal. According to the foregoing design, no inter-symbol interference exists between N second amplitude shift keying symbols in time domain, so that a probability of false determining for an amplitude shift keying symbol can be reduced.

As shown in FIG. 5A, the OFDM signal includes four first-interval signals in time domain, and the four first-interval signals do not overlap with each other.

As shown in FIG. 5B, the OFDM signal includes two first-interval signals in time domain, and the two first-interval signals do not overlap.

As shown in FIG. 5C, the OFDM signal includes four first-interval signals in time domain, and the four first-interval signals do not overlap with each other. The envelope of the first-interval signal 1 and the envelope of the first-interval signal 2 are in axial symmetry, a first-interval signal 3 is the same as the first-interval signal 1, and a first-interval signal 4 is the same as the first-interval signal 1. A dashed line determined by an end position of the first-interval signal 1 is an axis of symmetry between the envelope of the first-interval signal 1 and the envelope of the first-interval signal 2.

As shown in FIG. 5D, the OFDM signal includes two first-interval signals in time domain, and the two first-interval signals do not overlap. The envelope of the first-interval signal 1 and the envelope of the first-interval signal 2 are in axial symmetry. A dashed line determined by an end position of the first-interval signal 1 is an axis of symmetry between the envelope of the first-interval signal 1 and the envelope of the first-interval signal 2.

The following uses only two implementations as examples to describe a specific process in which the network device determines the OFDM signal.

In a first implementation, the network device may map a first sequence to a plurality of contiguous frequency domain subcarriers, and perform time domain mapping (for example, IFFT) on the plurality of mapped contiguous frequency domain subcarriers, to obtain the OFDM signal.

Further, the network device may divide the obtained OFDM signal into the N first-interval signals in time domain.

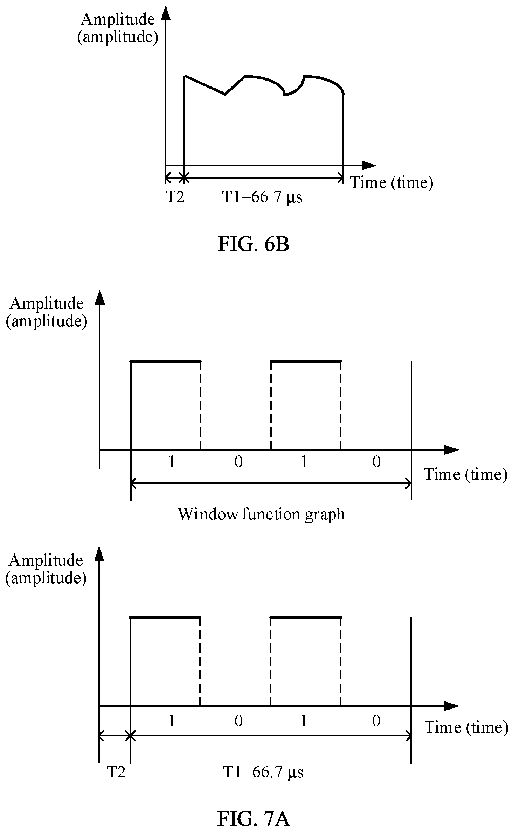

For example, the OFDM signal may be shown in FIG. 6A or FIG. 6B. FIG. 6A is a schematic of a simplified waveform of a time domain signal of the OFDM signal, and FIG. 6B is a schematic of a real waveform of a time domain signal of the OFDM signal. A frequency domain subcarrier spacing corresponding to the OFDM signal is 15 kHz, T1=$T_{CP}$, and T2=$T_{OFDM}$=66.7 $\mu$s, where $T_{CP}$ represents duration of a cyclic prefix, and $T_{OFDM}$ represents a symbol time of the OFDM signal, that is, a time length of an OFDM symbol that is at a subcarrier spacing of 15 kHz and that is before the cyclic prefix is added.

In the foregoing first implementation, the method is simple and easy to implement.

In a second implementation, the network device may map a first sequence to a plurality of non-contiguous frequency domain subcarriers, where any two adjacent frequency domain subcarriers in the plurality of non-contiguous frequency domain subcarriers are separated by N-1 frequency domain subcarriers. Further, time domain mapping (for example, IFFT) is performed on the plurality of mapped non-contiguous frequency domain subcarriers, to obtain the OFDM signal. In this case, the determined OFDM signal includes the N first-interval signals in time domain.

Alternatively, the network device may map a first sequence to a plurality of non-contiguous frequency domain subcarriers, where any two adjacent frequency domain subcarriers in the plurality of non-contiguous frequency domain subcarriers are separated by M-1 frequency domain subcarriers. Further, time domain mapping (for example, IFFT) is performed on the plurality of mapped non-contiguous frequency domain subcarriers, to obtain the OFDM signal. M is an integer greater than or equal to 2. For example, M=N or N=2M. In this case, the determined OFDM signal includes M first-interval signals in time domain. The network device may further divide the obtained OFDM signal into the N first-interval signals in time domain.

For example, when M=2 and N=4, the determined OFDM signal includes two first-interval signals in time domain. The network device may further divide the obtained OFDM signal into four first-interval signals in time domain.

It can be learned from FIG. 3 that, in an entire symbol time of 66.7 $\mu$s, a waveform of a time domain signal is not fully at a high level, but has a relatively large fluctuation. However, the OFDM signal generated in the foregoing second implementation may implement repetition of a time domain signal that fluctuates smoothly in the entire symbol time of 66.7 μs, to obtain a time domain signal that presents a relatively smooth waveform. In this way, when a secondary receiver of the terminal device performs non-coherent demodulation based on a received signal by using an envelope detector, if a first signal includes a plurality of amplitude shift keying symbols ON, the plurality of amplitude shift keying symbols ON included in the first signal can be accurately determined. Therefore, a probability of false determining is reduced.

For the first implementation and the second implementation, an element included in the first sequence may be a modulation constellation point in a first modulation scheme, where the first modulation scheme may be any one of BPSK, QPSK, 16QAM, 64QAM, or 256QAM. Alternatively, the first sequence is a ZC sequence. For example, the first sequence is a ZC sequence whose root factor is 1.

For example, an expression of the ZC sequence is:

$$s_k = exp(-j\pi u k(k+1)/N)$$

N is a length of the first sequence, that is, a quantity of frequency domain subcarriers actually occupied by the first sequence mapped to a frequency domain, $s_k$ is an element whose sequence number is k in the first sequence, and u is a root factor of the ZC sequence.

A peak-to-average power ratio (peak-to-average power ratio, PAPR) of a time domain OFDM signal to which the ZC sequence is mapped is low. Especially, an amplitude envelope and an energy fluctuation degree of a time domain OFDM signal to which a ZC sequence with a root factor of 1 is mapped are lower than an amplitude envelope and an energy fluctuation degree of a time domain OFDM signal to which a ZC sequence with another root factor is mapped. In this way, performance of subsequent amplitude shift keying symbol demodulation can be improved, and coverage performance of wake-up signal transmission can be effectively improved.

Step 410: The network device generates a first signal based on the OFDM signal and N bits, where the first signal includes the N second amplitude shift keying symbols in time domain.

The N bits may be understood as to-be-sent bits, to-be-transmitted bits, target sent bits, or some or all bits that carry a WUS. A value of each bit may be 0 or 1.

The second amplitude shift keying symbol may be an amplitude shift keying symbol ON or an amplitude shift keying symbol OFF.

In a possible implementation, the network device multiplies an $i^{th}$ first-interval signal in N first amplitude shift keying symbols by a window function corresponding to an $i^{th}$ bit in the N bits, to obtain an $i^{th}$ second amplitude shift keying symbol in N amplitude shift keying symbols.

According to the foregoing method, each of the N second amplitude shift keying symbols in the first signal can carry one bit, so that information transmission efficiency of the amplitude shift keying modulation scheme can be improved.

When a value of the $i^{th}$ bit is "1", the window function corresponding to the $i^{th}$ bit is any one of a rectangular window function, a Hanning (Hanning) window function, a Hamming (Hamming) window function, or a Blackman (Blackman) window function. For example, the rectangular window function is a function with an all-one function value. When a value of the $i^{th}$ bit is "0", the window function corresponding to the $i^{th}$ bit is a function with an all-zero function value. Alternatively, when the value of the $i^{th}$ bit is "0", the $i^{th}$ first-interval signal in the N first amplitude shift keying symbols does not need to be multiplied by the window function corresponding to the $i^{th}$ bit in the N bits, and the $i^{th}$ second amplitude shift keying symbol is directly set to an amplitude shift keying symbol OFF.

For example, the network device determines an OFDM signal, where the OFDM signal includes four first-interval signals, and the network device determines that four sent bits are "1010". When a window function corresponding to a bit of a value "1" is a rectangular window function, and a window function corresponding to a bit of a value "0" is a function with an all-zero function value, the network device multiplies a $1^{st}$ first-interval signal by a rectangular window function corresponding to a $1^{st}$ bit of a value "1 ", to learn that a $1^{st}$ second amplitude shift keying symbol is an amplitude shift keying symbol ON; multiplies a $2^{nd}$ first-interval signal by a function with an all-zero function value and that corresponds to a $2^{nd}$ bit of a value "0", to learn that a $2^{nd}$ second amplitude shift keying symbol is an amplitude shift keying symbol OFF; multiplies a $3^{rd}$ first-interval signal by a rectangular window function corresponding to a $3^{rd}$ bit of a value "1 ", to learn that a $3^{rd}$ second amplitude shift keying symbol is an amplitude shift keying symbol ON; and multiplies a $4^{th}$ first-interval signal by a function with an all-zero function value and that corresponds to a $4^{th}$ bit of a value "1", to learn that a $4^{th}$ second amplitude shift keying symbol is an amplitude shift keying symbol OFF.

That the network device multiplies a $1^{st}$ first-interval signal by a rectangular window function corresponding to a $1^{st}$ bit of a value "1" may be understood as that the network device multiplies all sampling points in a time domain signal corresponding to the $1^{st}$ first-interval signal correspondingly by the rectangular window function, that is, multiplies the time domain signal correspondingly by a function with an all-one function value. This may also be referred to as addition of a rectangular window to a time domain. The network device multiplies a $2^{nd}$ first-interval signal by a function with an all-zero function value and that corresponds to a $2^{nd}$ bit of a value "0" may be understood as that the network device multiplies all sampling points in a time domain signal corresponding to the $2^{nd}$ first-interval signal correspondingly by the function with the all-zero function value, that is, multiplies the time domain signal correspondingly by the function with the all-zero function value.

Duration of the first signal is the same as the duration of the OFDM signal. Duration of the second amplitude shift keying symbol is a second interval, and the second interval may be equal to a first interval. For example, second interval=first interval=$T_{OFDM}$/N, where $T_{OFDM}$ represents duration of one OFDM signal. Alternatively, the second interval is less than the first interval. Second interval<first interval=$T_{OFDM}$/N.

The duration of the OFDM signal is a time length of one OFDM symbol corresponding to a subcarrier spacing of at least one of 15 kHz, 30 kHz, or 60 kHz. The duration of the OFDM signal is a time length of the OFDM symbol before the cyclic prefix is added.

For example, when the second interval is less than the second interval, a guard interval exists between two adjacent second amplitude shift keying symbols. For example, when a guard interval exists between any two adjacent second amplitude shift keying symbols, the first interval is equal to $T_{OFDM}$/N, and the second interval is equal to ($T_{OFDM}$ - (N - 1) * $T_{GI}$)/N, where $T_{GI}$ represents duration corresponding to the guard interval. For example, the duration corresponding to the guard interval may be equal to duration of the cyclic prefix corresponding to the OFDM signal. For example, $T_{CP}$=$T_{GI}$. $T_{CP}$ indicates the duration of the cyclic prefix CP corresponding to the OFDM signal. Alternatively, the duration corresponding to the guard interval may be not equal to duration of the CP corresponding to the OFDM signal. This is not limited in this application. A signal for the guard interval may be a blank signal whose energy is 0, or a signal for the guard interval may be the same as a signal for a tail interval $T_{GI}$ that is intercepted from a signal corresponding to a next adjacent second amplitude shift keying symbol. In the foregoing design, the guard interval exists between adjacent second amplitude shift keying symbols in the first signal, so that when a receive end demodulates the second amplitude shift keying symbol, inter-symbol interference generated between the plurality of second amplitude shift keying symbols due to a multi-path channel and multi-path delay falls within the guard interval. The receive end removes the guard interval, to avoid impact of the inter-symbol interference on demodulation performance of the second amplitude shift keying symbol, thereby ensuring the demodulation performance of the second amplitude shift keying symbol.

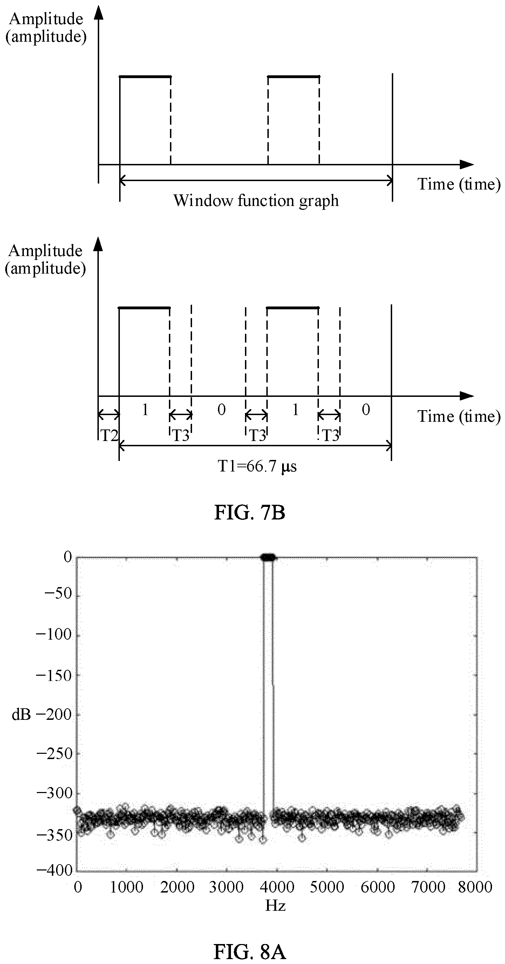

For example, in the foregoing scenario, when the OFDM signal includes four first-interval signals, the network device determines that four sent bits are "1010", and the second interval is equal to the first interval, the finally obtained first signal is shown in FIG. 7A. In this case, second interval=first interval=T1/4, and $T_{OFDM}$=T1. When the second interval is less than the first interval, the finally obtained first signal may be shown in FIG. 7B. In FIG. 7B, after the 1st second amplitude shift keying symbol, a guard interval exists between every two adjacent second amplitude shift keying symbols. First interval=$T_{OfDM}$/4, second interval=(T1 - 3 * T3)/4, $T_{CP}$=T2, $T_{GI}$=T3, and $T_{CP}$=$T_{GI}$.

In another possible implementation, the network device sequentially multiplies every X first-interval signals in N first amplitude shift keying symbols by a window function corresponding to one corresponding bit in N/X bits, to obtain X second amplitude shift keying symbols in N amplitude shift keying symbols. N is an integer multiple of X, and X is an integer greater than or equal to 2. X may be a quantity of repetition times of the second amplitude shift keying symbol that is predefined or indicated by the network device.

For example, if N=8 and X=2, N/X=4. For example, the network device determines an OFDM signal, where the OFDM signal includes eight first-interval signals, and the network device determines that four sent bits are "1010". When a window function corresponding to a bit of a value "1" is a rectangular window function, and a window function corresponding to a bit of a value "0" is a function with an all-zero function value, the network device multiplies a 1st first-interval signal and a 2nd first-interval signal separately by a rectangular window function corresponding to a 1st bit of a value "1 ", to learn that a 1st second amplitude shift keying symbol is an amplitude shift keying symbol ON, a 2nd second amplitude shift keying symbol is an amplitude shift keying symbol ON; multiplies a 3rd first-interval signal and a 4th first-interval signal separately by a function with an all-zero function value and that corresponds to a 2nd bit of a value "0", to learn that a 3rd second amplitude shift keying symbol is an amplitude shift keying symbol OFF, and a 4th second amplitude shift keying symbol is an amplitude shift keying symbol OFF; multiplies a 5th first-interval signal and a 6th first-interval signal separately by a rectangular window function corresponding to a 3rd bit of a value "1 ", to learn that a 5th second amplitude shift keying symbol is an amplitude shift keying symbol ON, and a 6th second amplitude shift keying symbol is an amplitude shift keying symbol ON; and multiplies a 7th first-interval signal and an 8th first-interval signal separately by a function with an all-zero function value and that corresponds to a 4th bit of a value "1", to learn that a 7th second amplitude shift keying symbol is an amplitude shift keying symbol OFF, and an 8th second amplitude shift keying symbol is an amplitude shift keying symbol OFF.

In the foregoing implementation, a repetition rate of bit transmission can be increased, so that parsing accuracy of the terminal device can be improved.

It may be understood that, when a window function corresponding to a bit of a value "1" is a rectangular window function, the foregoing manner of adding the rectangular window to the time domain actually causes out-of-band spectrum leakage for a spectrum of a signal. However, when the window function corresponding to the bit of the value "1" is replaced with a Hanning (Hanning) window function, a Hamming (Hamming) window function, or a Blackman (Blackman) window function sequence, the problem of out-of-band spectrum leakage after spectrum window addition can be alleviated.

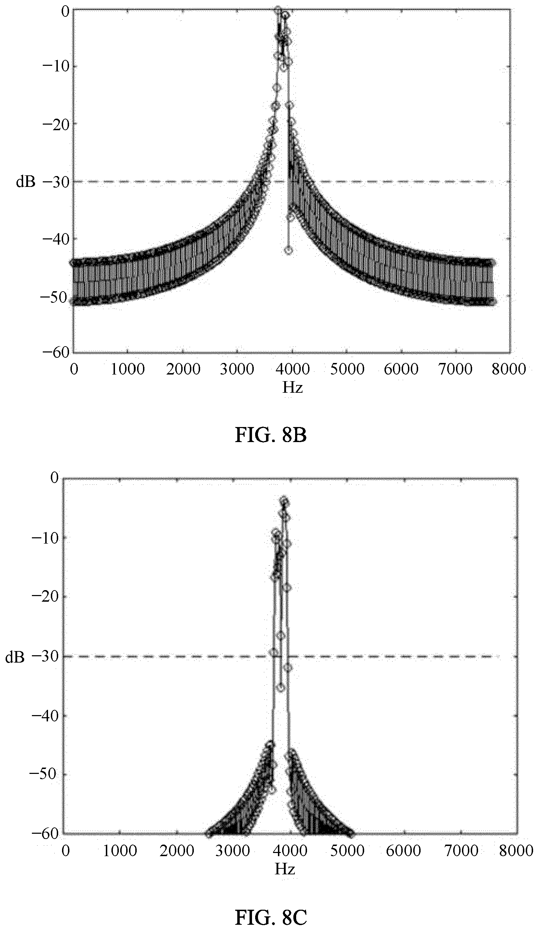

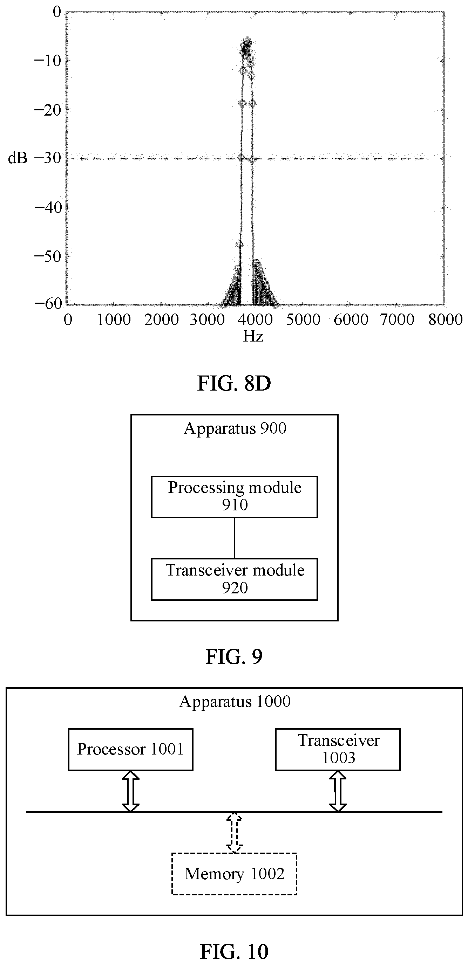

For example, FIG. 8A is a schematic of a spectrum of an OFDM signal. FIG. 8B is a schematic of a spectrum of a first signal determined when a window function corresponding to a bit of a value "1" is a rectangular window function. It can be learned from FIG. 8B that, in a spectrum area other than an intermediate spectrum area, out-of-band spectrum leakage of a side lobe is large. FIG. 8C is a schematic 1 of a spectrum of a first signal determined when a window function corresponding to a bit of a value "1" is a Hamming window function. It can be learned from FIG. 8C that, the window function is replaced from the rectangular window function with the Hamming window function, so that out-of-band spectrum leakage of a side lobe can be alleviated in comparison with the out-of-band spectrum leakage of the side lobe shown in FIG. 8B. FIG. 8D is a schematic 2 of a spectrum of a first signal determined when a window function corresponding to a bit of a value "1" is a Hamming window function. A difference between FIG. 8C and FIG. 8D lies in that an OFDM signal used in FIG. 8C is determined in the foregoing first implementation, and an OFDM signal used in FIG. 8D is determined in the foregoing second implementation. It can be learned that, an out-of-band spectrum leakage problem of a side lobe shown in FIG. 8D is further alleviated in comparison with the out-of-band spectrum leakage problem of the side lobe shown in FIG. 8C.

For example, it is assumed that a first-interval signal includes K time sampling points, where K is greater than or equal to 2, and the K time sampling points are multiplied correspondingly by K sampling points in a corresponding Hanning window function to obtain a first signal.

For example, a typical Hanning window function is:

$$W(n) = 0.54 - 0.46\cos\left(\frac{2\pi n}{K-1}\right)$$

$0 \leq n \leq K\text{-}1$, where n is a sequence number of a sampling point in the Hanning window function.

Step 420: The network device sends the first signal.

For example, the network device needs to perform the CP addition operation on the first signal obtained in step 410, to obtain a first signal to which the CP is added, and send the first signal to which the CP is added.

In addition, the network device further sends first information to the terminal device, and the first information indicates a relationship between the duration (namely, the second interval) of the second amplitude shift keying symbol and the duration of the first signal. For example, the first information indicates a value N of the second amplitude shift keying symbol included in the first signal, or the first information indicates a relationship between the duration (namely, the second interval) of the second amplitude shift keying symbol and the duration of the OFDM signal. According to the foregoing method, the terminal device determines the duration of the second amplitude shift keying symbol, so that the terminal device can correctly demodulate the second amplitude shift keying symbol based on the duration of the second amplitude shift keying symbol.

Step 430: The terminal device determines N second amplitude shift keying symbols based on the received first signal.

For example, the terminal device may determine the duration of the second amplitude shift keying symbol based on the relationship that is indicated by the first information and that is between the duration (namely, the second interval) of the second amplitude shift keying symbol and the duration of the first signal. Further, when determining the N second amplitude shift keying symbols based on the first signal, the terminal device determines the N second amplitude shift keying symbols based on the first signal and the duration of the second amplitude shift keying symbol.

In addition, the duration of the second amplitude shift keying symbol may be notified to the terminal device in another manner, or in a predefined manner. This is not limited in this application.

Step 440: The terminal device determines the N bits based on the N second amplitude shift keying symbols.

For example, the secondary receiver of the terminal device performs non-coherent demodulation based on the received first signal by using the envelope detector, further determines the N second amplitude shift keying symbols based on the second interval, and determines the N bits based on the N second amplitude shift keying symbols.

Specifically, when N=4, the first signal includes four second amplitude shift keying symbols. For example, the four second amplitude shift keying symbols are successively an amplitude shift keying symbol ON, an amplitude shift keying symbol OFF, an amplitude shift keying symbol ON, and an amplitude shift keying symbol OFF in a time sequence. The secondary receiver of the terminal device detects signal energy corresponding to a second amplitude shift keying symbol in a second interval. If the signal energy corresponding to the second amplitude shift keying symbol in the second interval is greater than a specified threshold, the second amplitude shift keying symbol is an amplitude shift keying symbol ON; or if the signal energy corresponding to the second amplitude shift keying symbol in the second interval is less than the specified threshold, the second amplitude shift keying symbol is an amplitude shift keying symbol OFF. Specifically, when determining that signal energy corresponding to a second amplitude shift keying symbol in a 1st second interval is greater than the specified threshold, the secondary receiver of the terminal device determines that the 1st second amplitude shift keying symbol is an amplitude shift keying symbol ON; when determining that signal energy corresponding to a second amplitude shift keying symbol in a 2nd second interval

is less than the specified threshold, the secondary receiver of the terminal device determines that the 2nd second amplitude shift keying symbol is an amplitude shift keying symbol OFF; when determining that signal energy corresponding to a second amplitude shift keying symbol in a 3rd second interval is greater than the specified threshold, the secondary receiver of the terminal device determines that the 3rd second amplitude shift keying symbol is an amplitude shift keying symbol ON; and when determining that signal energy corresponding to a second amplitude shift keying symbol in a 4th second interval is less than the specified threshold, the secondary receiver of the terminal device determines that the 4th second amplitude shift keying symbol is an amplitude shift keying symbol OFF. Finally, the terminal device determines that the four second amplitude shift keying symbols included in the first signal are successively an amplitude shift keying symbol ON, an amplitude shift keying symbol OFF, an amplitude shift keying symbol ON, and an amplitude shift keying symbol OFF.

Further, because a value of a bit corresponding to the amplitude shift keying symbol ON is "1", and a value of a bit corresponding to the amplitude shift keying symbol OFF is "0", the terminal device determines that the bits carried in the first information are "1010".

According to the foregoing method, the first signal may include the plurality of second amplitude shift keying symbols, so that in the NR or LTE OFDM system, a plurality of amplitude shift keying symbols can be transmitted, in duration of one OFDM symbol, to a terminal device having an envelope detection receiver or a terminal device for non-coherent demodulation. Therefore, information transmission efficiency of such a terminal device can be effectively improved, that is, an information transmission rate of an amplitude shift keying modulation scheme can be effectively improved.

FIG. 9 is a possible example block diagram of a communication apparatus according to an embodiment of this application. The apparatus 900 includes a transceiver module 920 and a processing module 910. The transceiver module 920 may include a receiving unit and a sending unit. The processing module 910 is configured to control and manage an action of the apparatus 900. The transceiver module 920 is configured to support communication between the apparatus 900 and another network entity. Optionally, the apparatus 900 may further include a storage unit, and the storage unit is configured to store program code and data of the apparatus 900.

Optionally, each module in the apparatus 900 may be implemented by software.

Optionally, the processing module 910 may be a processor or a controller, for example, may be a general-purpose central processing unit (central processing unit, CPU), a general-purpose processor, digital signal processing (digital signal processing, DSP), an application specific integrated circuit (application specific integrated circuit, ASIC), a field programmable gate array (field programmable gate array, FPGA) or another programmable logic device, a transistor logic device, a hardware component, or any combination thereof. The processing module 910 may implement or execute various example logical blocks, modules, and circuits described with reference to content disclosed in embodiments of this application. The processor may be a combination of processors implementing a computing function, for example, a combination of one or more microprocessors, or a combination of a DSP and a microprocessor. The transceiver module 920 may be a communication interface, a transceiver, a transceiver circuit, or the like. The communication interface is a general term. In a specific implementation, the communication interface may include a plurality of interfaces. The storage unit may be a memory.

When the apparatus 900 is a network device or a chip in the network device, the processing module 910 in the apparatus 900 may support the apparatus 900 in performing the actions of the network device in the foregoing method examples, for example, may support the apparatus 900 in performing step 400 or step 410 in FIG. 4.

The transceiver module 920 may support the apparatus 900 in communicating with a terminal device. For example, the transceiver module 920 may support the apparatus 900 in performing step 420 in FIG. 4.

For example, the processing module 910 is configured to: determine an OFDM signal, where the OFDM signal carries a first amplitude shift keying symbol, and the first amplitude shift keying symbol is an amplitude shift keying symbol ON; and generate a first signal based on the OFDM signal and N bits, where the first signal carries N second amplitude shift keying symbols in time domain, and N is a positive integer greater than or equal to 2. The transceiver module 920 is configured to send the first signal.

In a possible design, the OFDM signal includes N first-interval signals in time domain.

In a possible design, the N first-interval signals are the same, or the N first-interval signals have same energy.

In a possible design, the N first-interval signals do not overlap with each other in time domain, and the N second amplitude shift keying symbols do not overlap with each other in time domain.

In a possible design, the processing module 910 is configured to: when generating the first signal based on the OFDM signal and the N bits, multiply an ith first-interval signal in the N first-interval signals in the OFDM signal by a window function corresponding to an ith bit in the N bits, to obtain an ith second amplitude shift keying symbol in the N second amplitude shift keying symbols.

In a possible design, when the ith bit is 1, the window function corresponding to the ith bit is any one of a rectangular window function, a Hanning window function, a Hamming window function, or a Blackman window function; and/or the rectangular window function is a function with an all-one function value; and when the ith

bit is 0, the window function corresponding to the $i^{th}$ bit is a function with an all-zero function value.

In a possible design, duration of the second amplitude shift keying symbol is a second interval, and the second interval is equal to a first interval, or the second interval is less than the first interval.

In a possible design, duration of the first amplitude shift keying symbol is equal to duration of the OFDM signal; the first interval is equal to 1/N times the duration of the OFDM signal; and the second interval is less than or equal to 1/N times the duration of the OFDM signal.

In a possible design, the duration of the OFDM signal is a time length of one OFDM symbol corresponding to a subcarrier spacing of at least one of 15 kHz, 30 kHz, or 60 kHz.

In a possible design, when the second interval is less than the first interval, a guard interval exists between two adjacent second amplitude shift keying symbols.

In a possible design, duration corresponding to the guard interval is equal to duration of a cyclic prefix corresponding to the OFDM signal.

In a possible design, the processing module 910 is configured to: when determining the OFDM signal, map a first sequence to a plurality of non-contiguous frequency domain subcarriers, where any two adjacent frequency domain subcarriers in the plurality of non-contiguous frequency domain subcarriers are separated by N-1 frequency domain subcarriers; and perform time domain mapping on the plurality of mapped non-contiguous frequency domain subcarriers, to obtain the OFDM signal.

In a possible design, the processing module 910 is configured to: when determining the OFDM signal, map a first sequence to a plurality of contiguous frequency domain subcarriers; and perform time domain mapping on the plurality of mapped contiguous frequency domain subcarriers, to obtain the OFDM signal.

In a possible design, an element included in the first sequence is a modulation constellation point in a first modulation scheme, and the first modulation scheme is any one of BPSK, QPSK, 16QAM, 64QAM, or 256QAM; or the first sequence is a ZC sequence.

In a possible design, the transceiver module 920 is configured to send first information to the terminal device, where the first information indicates a relationship between the duration of the second amplitude shift keying symbol and duration of the first signal.

It should be understood that the apparatus 900 according to this embodiment of this application may correspond to the network device in the foregoing method embodiments, and operations and/or functions of the modules in the apparatus 900 are separately for implementing corresponding steps of the method of the network device in the foregoing method embodiments. Therefore, beneficial effects in the foregoing method embodiments can also be implemented. For brevity, details are not described herein again.

When the apparatus 900 is a terminal device or a chip in the terminal device, the processing module 910 in the apparatus 900 may support the apparatus 900 in performing the actions of the terminal device in the foregoing method examples, for example, may support the apparatus 900 in performing step 430 in FIG. 4.

The transceiver module 920 may support the apparatus 900 in communicating with a network device. For example, the transceiver module 920 may support the apparatus 900 in performing step 420 in FIG. 4.

For example, the transceiver module 920 is configured to receive a first signal, where the first signal includes N second amplitude shift keying symbols in time domain. The processing module 910 is configured to determine the N second amplitude shift keying symbols based on the first signal; and determine N bits based on the N second amplitude shift keying symbols.

In a possible design, the transceiver module 920 is configured to receive first information, where the first information indicates a relationship between duration of the second amplitude shift keying symbol and duration of the first signal. The processing module 910 is configured to: determine a second interval based on the relationship between the duration of the second amplitude shift keying symbol and the duration of the first signal; and when determining the N second amplitude shift keying symbols based on the first signal, determine the N second amplitude shift keying symbols based on the first signal and the duration of the second amplitude shift keying symbol.

It should be understood that the apparatus 900 according to this embodiment of this application may correspond to the terminal device in the foregoing method embodiments, and operations and/or functions of the modules in the apparatus 900 are separately for implementing corresponding steps of the method of the terminal device in the foregoing method embodiments. Therefore, beneficial effects in the foregoing method embodiments can also be implemented. For brevity, details are not described herein again.

FIG. 10 is a schematic of a structure of a communication apparatus 1000 according to an embodiment of this application. As shown in FIG. 10, the apparatus 1000 includes a processor 1001.

When the apparatus 1000 is a network device or a chip in the network device, in a possible implementation, the processor 1001 is configured to invoke an interface to perform the following actions:

determining an OFDM signal, where the OFDM signal carries a first amplitude shift keying symbol, and the first amplitude shift keying symbol is an amplitude shift keying symbol ON; generating a first signal based on the OFDM signal and N bits, where the first signal carries N second amplitude shift keying symbols in time domain, and N is a positive integer greater than or equal to 2; and sending the first signal.

It should be understood that the apparatus 1000 may be further configured to perform other steps and/or operations on the network device side in the foregoing embodiments. For brevity, details are not described herein.

When the apparatus 1000 is a terminal device or a chip in the terminal device, in a possible implementation, the processor 1001 is configured to invoke an interface to perform the following actions:

receiving a first signal, where the first signal includes N second amplitude shift keying symbols in time domain; determining the N second amplitude shift keying symbols based on the first signal; and determining N bits based on the N second amplitude shift keying symbols.

It should be understood that the apparatus 1000 may be further configured to perform other steps and/or operations on the terminal device side in the foregoing embodiments. For brevity, details are not described herein.

It should be understood that the processor 1001 may invoke the interface to perform the foregoing receiving and sending actions. The invoked interface may be a logic interface or a physical interface. This is not limited. Optionally, the physical interface may be implemented by using a transceiver. Optionally, the apparatus 1000 further includes a transceiver 1003.

Optionally, the apparatus 1000 further includes a memory 1002. The memory 1002 may store program code in the foregoing method embodiments, so that the processor 1001 invokes the program code.

Specifically, if the apparatus 1000 includes the processor 1001, the memory 1002, and the transceiver 1003, the processor 1001, the memory 1002, and the transceiver 1003 communicate with each other by using an internal connection path, to transfer a control signal and/or a data signal. In a possible design, the processor 1001, the memory 1002, and the transceiver 1003 may be implemented by using a chip, and the processor 1001, the memory 1002, and the transceiver 1003 may be implemented in a same chip, or may be separately implemented in different chips, or functions of any two of the processor 1001, the memory 1002, and the transceiver 1003 are implemented in one chip. The memory 1002 may store the program code, and the processor 1001 invokes the program code stored in the memory 1002, to implement a corresponding function of the apparatus 1000.

The method disclosed in the foregoing embodiment of this application may be applied to the processor, or may be implemented by the processor. The processor may be an integrated circuit chip and has a signal processing capability. In an implementation process, steps in the foregoing method embodiments can be implemented by using a hardware integrated logic circuit in the processor, or by using instructions in a form of software. The foregoing processor may be a general purpose processor, a digital signal processor (digital signal processor, DSP), an application specific integrated circuit (application specific integrated circuit, ASIC), a field programmable gate array (field programmable gate array, FPGA) or another programmable logic device, a discrete gate or a transistor logic device, or a discrete hardware assembly, or may be a system on chip (system on chip, SoC), or may be a central processing unit (central processor unit, CPU), or may be a network processor (network processor, NP), or may be a digital signal processor (digital signal processor, DSP), or may be a micro controller (micro controller unit, MCU), or may be a programmable logic device (programmable logic device, PLD) or another integrated chip. It may implement or perform the methods, the steps, and logical block diagrams that are disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. A software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

It may be understood that the memory in embodiments of this application may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitation, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus random access memory (direct rambus RAM, DR RAM). It should be noted that the memory of the systems and methods described in this specification includes but is not limited to these and any memory of another proper type.

It should be understood that in embodiments of this application, numbers "first", "second", and the like are merely used to distinguish between different objects, for example, to distinguish between different parameter information or messages, and do not constitute a limitation on the scope of embodiments of this application. Embodiments of this application are not limited thereto.

It should be further understood that sequence numbers of the foregoing processes do not mean execution sequences in embodiments of this application. The execution sequences of the processes should be determined based on functions and internal logic of the processes. Various numerical numbers or sequence numbers involved in the foregoing processes are merely distinguished for ease of description, and should not constitute any limitation on the implementation processes of embodiments of this application.

It should also be understood that the term "and/or" in this specification describes only an association relationship between associated objects and represents that three relationships may exist. For example, A and/or B may represent the following three cases: Only A exists, both A and B exist, and only B exists. In addition, the character "/" in this specification generally indicates an "or" relationship between the associated objects.

Unless otherwise specified, an expression used in this application similar to an expression that "an item includes one or more of the following: A, B, and C" usually means that the item may be any one of the following: A; B; C; A and B; A and C; B and C; A, B, and C; A and A; A, A, and A; A, A, and B; A, A, and C; A, B, and B; A, C, and C; B and B; B, B, and B; B, B, and C; C and C; C, C, and C; and another combination of A, B, and C. In the foregoing descriptions, three elements A, B, and C are used as an example to describe an optional case of the item. When an expression is "the item includes at least one of the following: A, B, ..., and X", in other words, more elements are included in the expression, a case to which the item is applicable may also be obtained according to the foregoing rule.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may be or may not be physically separate, and parts displayed as units may be or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the prior art, or some of the technical solutions may be implemented in a form of a software product. The software product is stored in a storage medium, and includes several instructions for instructing a computer device (which may be a personal computer, a server, or a network device) to perform all or some of the steps of the methods described in the embodiments of this application. The foregoing storage medium includes any medium that can store program code, such as a USB flash drive, a removable hard disk, a read-only memory ROM, a random access memory RAM, a magnetic disk, or an optical disc.

**Claims**

1. A communication method, wherein the method comprises:

   determining an orthogonal frequency division multiplexing OFDM signal, wherein the OFDM signal carries a first amplitude shift keying symbol, and the first amplitude shift keying symbol is an amplitude shift keying symbol ON;
   generating a first signal based on the OFDM signal and N bits, wherein the first signal carries N second amplitude shift keying symbols in time domain, and N is a positive integer greater than or equal to 2; and
   sending the first signal.

**2.** The method according to claim 1, wherein the OFDM signal comprises N first-interval signals in time domain.

**3.** The method according to claim 2, wherein the N first-interval signals are the same, or the N first-interval signals have same energy.

**4.** The method according to claim 2 or 3, wherein the N first-interval signals do not overlap with each other in time domain, and the N second amplitude shift keying symbols do not overlap with each other in time domain.

**5.** The method according to any one of claims 2 to 4, wherein the generating a first signal based on the OFDM signal and N bits comprises:
multiplying an $i^{th}$ first-interval signal in the N first-interval signals in the OFDM signal by a window function corresponding to an $i^{th}$ bit in the N bits, to obtain an $i^{th}$ second amplitude shift keying symbol in the N second amplitude shift keying symbols.

**6.** The method according to claim 5, wherein when the $i^{th}$ bit is 1, the window function corresponding to the $i^{th}$ bit is any one of a rectangular window function, a Hanning window function, a Hamming window function, or a Blackman window function, and the rectangular window function is a function with an all-one function value; and/or
when the $i^{th}$ bit is 0, the window function corresponding to the $i^{th}$ bit is a function with an all-zero function value.

**7.** The method according to any one of claims 2 to 6, wherein duration of the second amplitude shift keying symbol is a second interval, and the second interval is equal to a first interval, or the second interval is less than the second interval.

**8.** The method according to claim 7, wherein duration of the first amplitude shift keying symbol is equal to duration of the OFDM signal, and duration of the first signal is equal to the duration of the OFDM signal;

the first interval is equal to 1/N times the duration of the OFDM signal; and
the second interval is less than or equal to 1/N times the duration of the OFDM signal.

**9.** The method according to claim 8, wherein the duration of the OFDM signal is a time length of one OFDM symbol corresponding to a subcarrier spacing of at least one of 15 kHz, 30 kHz, or 60 kHz.

**10.** The method according to any one of claims 7 to 9, wherein when the second interval is less than the first interval, a guard interval exists between two adjacent second amplitude shift keying symbols.

**11.** The method according to claim 10, wherein duration corresponding to the guard interval is equal to duration of a cyclic prefix corresponding to the OFDM signal.

**12.** The method according to any one of claims 1 to 11, wherein the determining an OFDM signal comprises:

mapping a first sequence to a plurality of non-contiguous frequency domain subcarriers, wherein any two adjacent frequency domain subcarriers in the plurality of non-contiguous frequency domain subcarriers are separated by N-1 frequency domain subcarriers; and
performing time domain mapping on the plurality of mapped non-contiguous frequency domain subcarriers, to obtain the OFDM signal.

**13.** The method according to any one of claims 1 to 11, wherein the determining an OFDM signal comprises:

mapping a first sequence to a plurality of contiguous frequency domain subcarriers; and
performing time domain mapping on the plurality of mapped contiguous frequency domain subcarriers, to obtain the OFDM signal.

**14.** The method according to claim 12 or 13, wherein an element comprised in the first sequence is a modulation constellation point in a first modulation scheme, and the first modulation scheme is any one of binary phase shift keying BPSK, quadrature phase shift keying QPSK, 16 quadrature amplitude modulation QAM, 64QAM, or 256QAM; or
the first sequence is a ZC sequence.

**15.** The method according to any one of claims 1 to 14, further comprising:
sending first information to a terminal device, wherein the first information indicates a relationship between the duration of the second amplitude shift keying symbol and the duration of the first signal.

**16.** A communication method, wherein the method comprises:

receiving a first signal, wherein the first signal comprises N second amplitude shift keying symbols in time domain;
determining the N second amplitude shift keying symbols based on the first signal; and
determining N bits based on the N second amplitude shift keying symbols.

**17.** The method according to claim 16, further comprising:

receiving first information, wherein the first information indicates a relationship between duration of the second amplitude shift keying symbol and duration of the first signal;
the method further comprises:

determining the duration of the second amplitude shift keying symbol based on the relationship between the duration of the second amplitude shift keying symbol and the duration of the first signal; and
the determining the N second amplitude shift keying symbols based on the first signal comprises:
determining the N second amplitude shift keying symbols based on the first signal and the duration of the second amplitude shift keying symbol.

18. A communication apparatus, wherein the apparatus comprises a processing unit and a transceiver unit;

the processing unit is configured to: determine an OFDM signal, wherein the OFDM signal carries a first amplitude shift keying symbol, and the first amplitude shift keying symbol is an amplitude shift keying symbol ON; and generate a first signal based on the OFDM signal and N bits, wherein the first signal carries N second amplitude shift keying symbols in time domain, and N is a positive integer greater than or equal to 2; and
the transceiver unit is configured to send the first signal.

19. The apparatus according to claim 18, wherein the OFDM signal comprises N first-interval signals in time domain.

20. The apparatus according to claim 19, wherein the N first-interval signals are the same, or the N first-interval signals have same energy.

21. The apparatus according to claim 19 or 20, wherein the N first-interval signals do not overlap with each other in time domain, and the N second amplitude shift keying symbols do not overlap with each other in time domain.

22. The apparatus according to any one of claims 19 to 21, wherein the processing unit is configured to: when generating the first signal based on the OFDM signal and the N bits, multiply an $i^{th}$ first-interval signal in the N first-interval signals in the OFDM signal by a window function corresponding to an $i^{th}$ bit in the N bits, to obtain an $i^{th}$ second amplitude shift keying symbol in the N second amplitude shift keying symbols.

23. The apparatus according to claim 22, wherein when the $i^{th}$ bit is 1, the window function corresponding to the $i^{th}$ bit is any one of a rectangular window function, a Hanning window function, a Hamming window function, or a Blackman window function, and the rectangular window function is a function with an all-one function value; and/or
when the $i^{th}$ bit is 0, the window function corresponding to the $i^{th}$ bit is a function with an all-zero function value.

24. The apparatus according to any one of claims 19 to 23, wherein duration of the second amplitude shift keying symbol is a second interval, and the second interval is equal to a first interval, or the second interval is less than the first interval.

25. The apparatus according to claim 24, wherein duration of the first amplitude shift keying symbol is equal to duration of the OFDM signal, and duration of the first signal is equal to the duration of the OFDM signal;

the first interval is equal to 1/N times the duration of the OFDM signal; and
the second interval is less than or equal to 1/N times the duration of the OFDM signal.

26. The apparatus according to claim 24, wherein the duration of the OFDM signal is a time length of one OFDM symbol corresponding to a subcarrier spacing of at least one of 15 kHz, 30 kHz, or 60 kHz.

27. The apparatus according to any one of claims 24 to 26, wherein when the second interval is less than the first interval, a guard interval exists between two adjacent second amplitude shift keying symbols.

28. The apparatus according to claim 27, wherein duration corresponding to the guard interval is equal to duration of a cyclic prefix corresponding to the OFDM signal.

29. The apparatus according to any one of claims 18 to 28, wherein the processing unit is configured to: when determining the OFDM signal, map a first sequence to a plurality of non-contiguous frequency domain subcarriers, wherein any two adjacent frequency domain subcarriers in the plurality of non-contiguous frequency domain subcarriers are separated by N-1 frequency domain subcarriers; and perform time domain mapping on the plurality of mapped non-contiguous frequency domain subcarriers, to obtain the OFDM signal.

30. The apparatus according to any one of claims 18 to 28, wherein the processing unit is configured to: when determining the OFDM signal, map a first sequence to a plurality of contiguous frequency domain subcarriers; and
perform time domain mapping on the plurality of mapped contiguous frequency domain subcarriers, to obtain the OFDM signal.

31. The apparatus according to claim 29 or 30, wherein an element comprised in the first sequence is a modulation constellation point in a first modulation scheme, and the first modulation scheme is any one of BPSK, QPSK, 16QAM, 64QAM, or 256QAM; or the first sequence is a ZC sequence.

32. The apparatus according to any one of claims 18 to 31, wherein the transceiver unit is configured to send first information to a terminal device, wherein the first information indicates a relationship between the duration of the second amplitude shift keying symbol and the duration of the first signal.

33. A communication apparatus, wherein the apparatus comprises a transceiver unit and a processing unit;

the transceiver unit is configured to receive a first signal, wherein the first signal comprises N second amplitude shift keying symbols in time domain; and
the processing unit is configured to: determine the N second amplitude shift keying symbols based on the first signal; and determine N bits based on the N second amplitude shift keying symbols.

34. The apparatus according to claim 33, wherein the transceiver unit is configured to receive first information, wherein the first information indicates a relationship between duration of the second amplitude shift keying symbol and duration of the first signal;

the processing unit is further configured to determine the duration of the second amplitude shift keying symbol based on the relationship between the duration of the second amplitude shift keying symbol and the duration of the first signal; and
the processing unit is configured to: when determining the N second amplitude shift keying symbols based on the first signal, determine the N second amplitude shift keying symbols based on the first signal and the duration of the second amplitude shift keying symbol.

35. A computer-readable storage medium, wherein the storage medium stores a computer program or instructions; and when the computer program or the instructions are executed by a communication apparatus, the method according to any one of claims 1 to 17 is implemented.

FIG. 1

FIG. 2

FIG. 3

Network device | Terminal device

Step 400: Determine an OFDM signal

Step 410: Generate a first signal based on the OFDM signal and N bits

Step 420: First signal →

Step 430: Determine N second amplitude shift keying symbols based on the received first signal

Step 440: Determine the N bits based on the N second amplitude shift keying symbols

**FIG. 4**

Amplitude (amplitude)

Time (time)

T2   T1=66.7 μs

**FIG. 5A**

Amplitude (amplitude)

Time (time)

T2   T1=66.7 μs

**FIG. 5B**

FIG. 5C

FIG. 5D

FIG. 6A

Amplitude
(amplitude)

Time (time)

T2    T1=66.7 µs

FIG. 6B

Amplitude
(amplitude)

1    0    1    0    Time (time)

Window function graph

Amplitude
(amplitude)

1    0    1    0    Time (time)

T2    T1=66.7 µs

FIG. 7A

FIG. 7B

FIG. 8A

FIG. 8B

FIG. 8C

FIG. 8D

FIG. 9

FIG. 10

## INTERNATIONAL SEARCH REPORT

| | International application No. |
|---|---|
| | **PCT/CN2022/139383** |

| | |
|---|---|
| **A.** | **CLASSIFICATION OF SUBJECT MATTER** |
| | H04L27/26(2006.01)i |

According to International Patent Classification (IPC) or to both national classification and IPC

| | |
|---|---|
| **B.** | **FIELDS SEARCHED** |

Minimum documentation searched (classification system followed by classification symbols)

   IPC:H04L

Documentation searched other than minimum documentation to the extent that such documents are included in the fields searched

Electronic data base consulted during the international search (name of data base and, where practicable, search terms used)

   CNPAT, EPODOC, WPI, 3GPP: 正交频分复用, 幅移键控, 符号, 比特, 信号, 调制, 发送, 接收, 间隔, 多, 大于1, N, 2, ON, OFDM, bit, ASK, mutli+, signal, modulat+, transmit+, receiv+, time

| | |
|---|---|
| **C.** | **DOCUMENTS CONSIDERED TO BE RELEVANT** |

| Category* | Citation of document, with indication, where appropriate, of the relevant passages | Relevant to claim No. |
|---|---|---|
| X | CN 112054982 A (HUAWEI TECHNOLOGIES CO., LTD.) 08 December 2020 (2020-12-08) description, paragraphs [0086]-[0170], and figures 1-11 | 1-35 |
| X | US 2007189405 A1 (QU, Shouxing) 16 August 2007 (2007-08-16) description, paragraphs [0015]-[0035], and claims 1-15, and figures 1-5 | 1-35 |
| A | JP 2003244091 A (VICTOR COMPANY OF JAPAN) 29 August 2003 (2003-08-29) entire document | 1-35 |
| A | US 2018212806 A1 (KHALIFA UNIVERSITY OF SCIENCE AND TECHNOLOGY) 26 July 2018 (2018-07-26) entire document | 1-35 |
| A | HUAWEI et al. "PTRS for DFT-s-OFDM" *3GPP TSG RAN WG1 Ad Hoc Meeting R1-1709940*, 30 June 2017 (2017-06-30), entire document | 1-35 |

☐ Further documents are listed in the continuation of Box C.      ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **31 January 2023** | **14 February 2023** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**
**Information on patent family members**

| International application No. |
| --- |
| **PCT/CN2022/139383** |

| Patent document cited in search report | | | Publication date (day/month/year) | Patent family member(s) | | | Publication date (day/month/year) |
| --- | --- | --- | --- | --- | --- | --- | --- |
| CN | 112054982 | A | 08 December 2020 | WO | 2020244392 | A1 | 10 December 2020 |
| US | 2007189405 | A1 | 16 August 2007 | CA | 2578464 | A1 | 13 August 2007 |
| | | | | EP | 1819121 | A1 | 15 August 2007 |
| | | | | DE | 602007000199 | D1 | 11 December 2008 |
| | | | | US | 8406318 | B2 | 26 March 2013 |
| | | | | US | 2013148764 | A1 | 13 June 2013 |
| | | | | US | 8842759 | B2 | 23 September 2014 |
| JP | 2003244091 | A | 29 August 2003 | None | | | |
| US | 2018212806 | A1 | 26 July 2018 | US | 9509538 | B1 | 29 November 2016 |
| | | | | US | 2017118051 | A1 | 27 April 2017 |
| | | | | US | 9954699 | B2 | 27 April 2017 |

Form PCT/ISA/210 (patent family annex) (July 2022)

**REFERENCES CITED IN THE DESCRIPTION**

**Patent documents cited in the description**

- CN 202111541846